(19) **Europäisches Patentamt European Patent Office Office européen des brevets**

(11) **EP 1 604 170 B1**

(12) **FASCICULE DE BREVET EUROPEEN**

(45) Date de publication et mention
de la délivrance du brevet:
**06.05.2015 Bulletin 2015/19**

(51) Int Cl.:
*G01B 17/02* (2006.01)     *G01N 29/04* (2006.01)
*G01H 13/00* (2006.01)     *G01M 5/00* (2006.01)

(21) Numéro de dépôt: **04719483.2**

(22) Date de dépôt: **11.03.2004**

(86) Numéro de dépôt international:
**PCT/FR2004/000596**

(87) Numéro de publication internationale:
**WO 2004/083969 (30.09.2004 Gazette 2004/40)**

(54) **PROCEDE ET SYSTEME POUR SURVEILLER LE COMPORTEMENT D'UNE TUYAUTERIE CONTENANT UN FLUIDE SOUS PRESSION**

VERFAHREN UND SYSTEM ZUR ÜBERWACHUNG DER LEISTUNG EINER ROHRLEITUNG, DIE EIN DRUCKFLUIDUM ENTHÄLT

METHOD AND SYSTEM FOR MONITORING THE PERFORMANCE OF A PIPE CONTAINING A PRESSURISED FLUID

(84) Etats contractants désignés:
**AT BE BG CH CY CZ DE DK EE ES FI FR GB GR HU IE IT LI LU MC NL PL PT RO SE SI SK TR**

(30) Priorité: **11.03.2003 FR 0302969**

(43) Date de publication de la demande:
**14.12.2005 Bulletin 2005/50**

(73) Titulaire: **Oxand**
**77210 Avon (FR)**

(72) Inventeurs:
• **BERNARD, Olivier**
**CH-1006 Lausanne (CH)**
• **GERARD, Bruno**
**F-77690 Montigny sur Loing (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**EP-A- 0 358 994     DE-A- 3 531 975**
**US-A- 6 000 277**

• **PATENT ABSTRACTS OF JAPAN vol. 1997, no. 10, 31 octobre 1997 (1997-10-31) & JP 9 145530 A (MITSUBISHI HEAVY IND LTD), 6 juin 1997 (1997-06-06)**

## Description

La présente invention concerne un procédé pour surveiller (monitoring) le comportement d'une tuyauterie contenant un fluide sous pression. Elle vise également un système mettant en oeuvre ce procédé.

Cette invention s'inscrit dans le cadre général de la gestion du vieillissement des tuyauteries, en particulier en béton armé ou précontraint contenant un fluide sous pression dont la face externe est accessible (soit en galerie, soit par dégagement).

Ces tuyauteries en béton armé ou précontraint sont pourvues de tiges d'acier susceptibles d'être soumises à un phénomène de corrosion qui se traduit dans le temps par une diminution de leur section. On fera référence dans la suite à la notion, bien connue dans ce domaine, de section résiduelle d'acier.

Le document DE 35 31 975 A1 décrit un système et un procédé de surveillance de l'épaisseur de la paroi d'une tuyauterie.

Une préoccupation majeure des opérateurs de systèmes de transport de fluide sous pression est de maîtriser le risque d'éclatement de tuyauteries contenant ces fluides sous pression.

Cet objectif est atteint avec un procédé selon la revendication 1 pour surveiller (monitoring) le comportement d'une tuyauterie béton armé contenant un fluide sous pression, cette tuyauterie comportant au moins une zone courante et des zones singulières.

Dans une forme particulière complète de l'invention, le procédé de surveillance comprend en outre une surveillance (monitoring) dynamique de la tuyauterie, pour fournir des informations de modes et de fréquences propres de vibration de ladite tuyauterie. Ces informations de modes et de fréquences propres sont alors aussi exploitées, avec les informations de dilatations circonférentielles, pour le calcul de la rigidité effective et de la section d'acier résiduelle mesurée.

Le procédé selon l'invention peut en outre avantageusement comprendre :

- un processus de prédiction de l'évolution temporelle A's(t>ti) d'un estimateur A's(ti) de la section d'acier résiduelle, cette prédiction étant effectuée sur la base d'une modèle de la corrosion et du comportement mécanique de la tuyauterie,
- une comparaison entre la section d'acier résiduelle mesurée (As(ti) et l'estimateur A's(ti) de la section d'acier résiduelle, et
- une actualisation du modèle de corrosion, lorsque la différence entre ladite section d'acier résiduelle mesurée As(ti) et ledit estimateur de section d'acier résiduelle A's(ti) est supérieure à une précision prédéterminée.

Dans une version avantageuse de l'invention, le processus de prédiction est agencé pour intégrer, dans la phase d'actualisation du modèle de corrosion, une information provenant d'une source externe.

Le procédé de surveillance (monitoring) selon l'invention peut en outre comprendre une comparaison de la valeur mesurée As(ti) de la section d'acier résiduelle à un critère limite de tenue mécanique (CL), cette comparaison étant suivie :

- soit d'une émission d'une information de remplacement immédiat d'un tronçon de ladite tuyauterie correspondant aux zones surveillées, lorsque cette valeur mesurée As(ti) est inférieure audit critère limite de tenue mécanique (CL),
- soit d'un calcul d'une durée de vie résiduelle D(ti) de ladite tuyauterie.

Le procédé selon l'invention peut en outre comprendre une comparaison de la valeur mesurée As(ti) de la section d'acier résiduelle à un critère d'alarme (CA) associée à la tenue mécanique de ladite tuyauterie, cette comparaison étant suivie :

- soit d'une émission d'une information de confortement et de remplacement ultérieur d'un tronçon de ladite tuyauterie correspondant aux zones surveillées, lorsque cette valeur mesurée As(ti) est inférieure audit critère d'alarme (CA),
- soit d'un calcul d'une durée d'exploitation avant alarme Da(ti) de ladite tuyauterie.

Suivant un autre, aspect de l'invention, il est proposé un système selon la revendication 7 pour surveiller (monitoring) le comportement d'une tuyauterie contenant un fluide sous pression, cette tuyauterie comportant au moins une zone courante et des zones singulières.

Dans une forme particulière de réalisation de l'invention, ce système comprend en outre un dispositif de surveillance (monitoring) dynamique de la tuyauterie, pour fournir des informations de modes et de fréquences propres de vibration de cette tuyauterie, ces informations de modes et de fréquences propres étant aussi exploitées par les moyens pour calculer la rigidité effective et la section d'acier résiduelle de la tuyauterie.

Le système selon l'invention peut en outre avantageusement comprendre :

- des moyens pour prédire l'évolution temporelle A's(t>ti) d'un estimateur A's(ti) de la section d'acier résiduelle, cette prédiction étant effectuée sur la base d'une modèle de la corrosion et du comportement mécanique de la tuyauterie,
- des moyens pour comparer la section d'acier résiduelle mesurée (As(ti) et l'estimateur A's(ti) de la section d'acier résiduelle, et
- des moyens pour actualiser le modèle de corrosion, lorsque la différence entre ladite section d'acier résiduelle mesurée As(ti) et ledit estimateur de section d'acier résiduelle A's(ti) est supérieure à une précision prédéterminée.

Le dispositif de surveillance (monitoring) statique peut comprendre des moyens pour mesurer dés déformations longitudinales d'un tronçon de la tuyauterie et des moyens pour mesurer des déformations circonférentielles dudit tronçon.

Le dispositif de surveillance (monitoring) dynamique comprend des moyens de sismométrie pour mesurer en un nombre prédéterminé de points sur la tuyauterie des vitesses de déplacement.

Le système selon l'invention peut en outre comprendre des moyens pour prétraiter des données brutes fournies par le dispositif de surveillance (monitoring) statique et par le dispositif de surveillance (monitoring) dynamique, ces moyens de prétraitement étant agencés pour calculer une déformation moyenne sur une période données et des fréquences propres moyennes en phase d'exploitation.

La présente invention combine des techniques de monitoring permanent du comportement en service de ce type de tuyauteries et la modélisation prédictive de son vieillissement dans le but de maîtriser le risque d'éclatement de ces tuyaux et d'optimiser leurs périodes de remplacement.

Le comportement à long terme des zones singulières (par exemple, le passage au droit des blocs d'appui, les coudes, les cônes de réduction, ...) de ce type de tuyauterie doit être différentié du comportement à long terme de la zone courante, comme l'illustre le Tableau 1. Par conséquent, le système de monitoring intelligent selon l'invention doit intégrer cette différence de comportement et de priorité au niveau du suivi.

| | Zones singulières | Zones courantes |
|---|---|---|
| **Corrosion interne généralisée** | + | + |
| **Corrosion externe** | + | |
| **Défauts initiaux** | ++ | + |
| **Priorité** | +++ | + |
| **Monitoring « statique »** | XX | |
| **Monitoring « dynamique »** | x (autres modes de vibration) | XX (Mode I de vibration) |

Le procédé selon l'invention consiste ainsi, dans sa version complète :

- à instrumenter à l'aide d'un monitoring « statique » un nombre limité de zones singulières (appuis, coudes, ...) préalablement définies ;
- et de compléter ce dispositif en instrumentant un tronçon de tuyauterie comprenant des zones courantes et des zones singulières à l'aide d'un monitoring « dynamique ».

Mais il est à noter que le procédé selon l'invention peut fort bien opérer uniquement à partir d'un monitoring statique.

Une contribution significative procurée par le procédé et le système selon l'invention dans sa version complète est liée à la combinaison de deux types de monitoring (statique et dynamique) dont l'originalité est de pouvoir suivre en permanence le comportement mécanique de la zone courante et celui des zones singulières.

La seconde contribution procurée par le procédé et le système selon l'invention repose sur la mise au point d'une solution combinant les méthodes de suivi (suivi des déformations circonférentielles et longitudinales, suivi des modes et fréquences propres) d'un tronçon d'une tuyauterie et un prétraitement des données mesurées. Cette solution permet de déterminer de manière indirecte la section d'acier résiduelle du tronçon instrumenté.

La troisième contribution repose sur la valorisation des données issues du suivi dans un modèle de prédiction de la cinétique de corrosion des parties métalliques des tuyauteries. Cet enrichissement de la modélisation permet de converger vers une prédiction de la durée de vie qui minimise toute incertitude et qui permet de déclencher les bonnes actions de maintenance au bon moment.

En conclusion, ces trois contributions permettent d'optimiser les périodes de remplacement des tuyauteries instrumentées tout en maîtrisant le risque d'éclatement de ces structures.

Le procédé de surveillance (monitoring) selon l'invention permet de :

- déterminer en permanence et de manière indirecte la section d'acier résiduelle présente dans une tuyauterie en béton armé ;
- confronter les valeurs mesurées à des estimateurs issus de modèles physiques validés ;
- valoriser les données issues du suivi dans un outil prédictif pour prédire l'évolution à long terme de la section d'acier résiduelle en minimisant les sources d'incertitudes ;
- confronter les valeurs mesurées à des critères de tenue mécanique ;
- de définir une stratégie globale de gestion d'un réseau de tuyauteries en instrumentant qu'un nombre limité de tronçons singuliers ;
- engager les actions de maintenance appropriées à l'état de détérioration des tuyauteries en terme de coûts et de délais ;
- minimiser les coûts associés à la maintenance des tuyauteries ;
- maîtriser les risques d'éclatement des tuyauteries;
- rassurer les autorités de surveillance et le public en mettant en avant un contrôle permanent et actif à l'aide du dispositif de monitoring intelligent.

D'autres avantages et caractéristiques de l'invention apparaîtront à l'examen de la description détaillée d'un mode de mise en oeuvre nullement limitatif, et des dessins annexés sur lesquels :

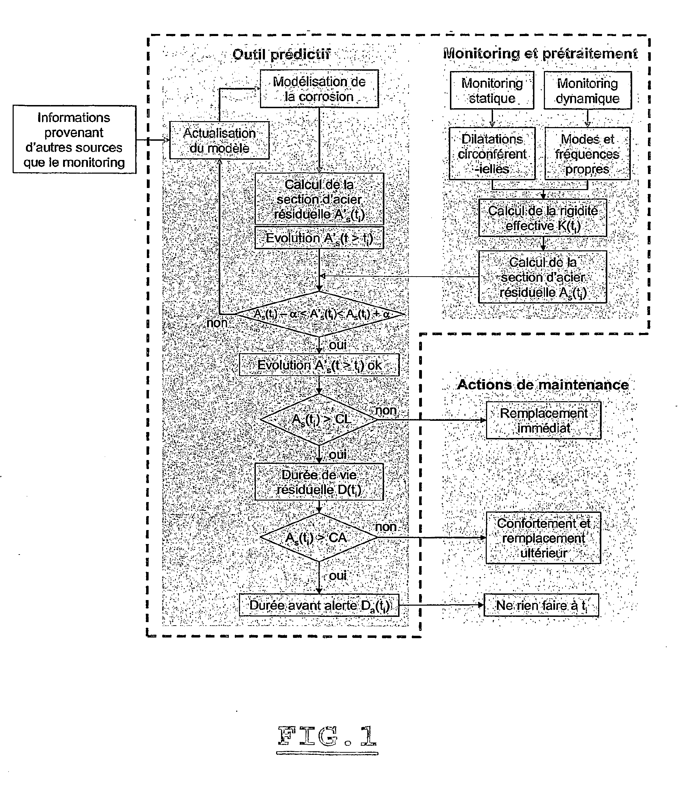

- la figure 1 illustre le principe de fonctionnement du procédé selon l'invention ;

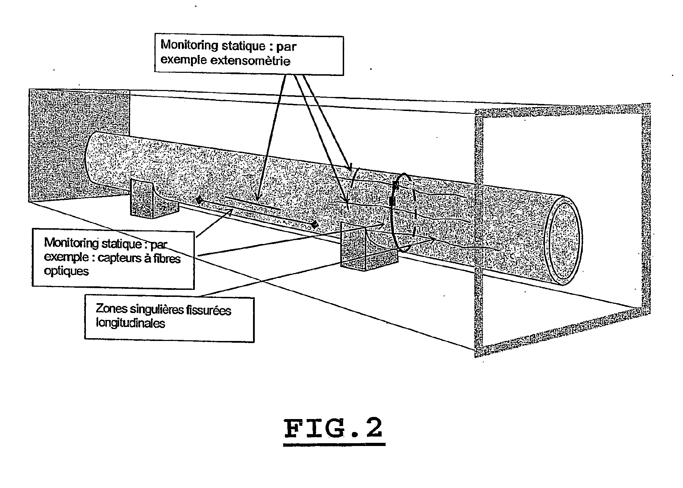

- la figure 2 est une description schématique d'un dispositif de monitoring statique;
- la figure 3 illustre le comportement sous pression d'une tuyauterie pour laquelle la solution peut être mise en oeuvre (cas d'un tuyau en béton armé) ;
- la figure 4 illustre Les différentes étapes du prétraitement des données de base permettant d'aboutir à la valeur de la section d'acier résiduelle (illustrées pour le cas du monitoring statique) ; et
- la figure 5 illustre une procédure d'actualisation mise en oeuvre dans le procédé selon l'invention.

La combinaison entre les techniques de suivi permanent et l'outil prédictif constitue le dispositif de monitoring intelligent (DMI) que constitue le système selon l'invention.

Un prétraitement des données issues du monitoring permanent est nécessaire pour ne retenir qu'un nombre limité de données (rigidité de la tuyauterie $K(t_i)$ et sa section d'acier résiduelle $A_s(t_i)$) synthétisant les mesures prises sur une période définie.

L'outil prédictif est construit autour de lois physiques (modélisation de la corrosion et du comportement mécanique de la tuyauterie) permettant de déterminer par calcul un estimateur de la section d'acier résiduelle $A'_s(t_i)$ et son évolution au cours du temps $A'_s(t > t_i)$.

La section d'acier résiduelle obtenue par le système de monitoring $A_s(t_i)$ est ensuite comparée, à intervalles réguliers, à son estimateur $A'_s(t_i)$. Si la différence entre ces deux valeurs est supérieure à une précision E fixée au préalable, la valeur de la section d'acier résiduelle mesurée $A_s(t_i)$ est utilisée pour actualiser le modèle de corrosion. Cette procédure d'actualisation permet de recalculer l'estimateur de la section d'acier résiduelle $A'_s(t_i)$ et son évolution dans le temps $A'_s(t > t_i)$. L'outil prédictif est conçu de manière à pouvoir intégrer dans la phase d'actualisation du modèle de corrosion une information provenant d'une source autre que le monitoring statique ou dynamique (essais en laboratoire, inspections visuelles, nombre de défaillances, ...).

Une fois que la précision recherchée est obtenue, la valeur de la section d'acier résiduelle mesurée $A_s(t_i)$ est comparée à un critère limite de tenue mécanique CL. Si la valeur mesurée est inférieure au critère, un remplacement immédiat du tronçon de tuyauterie instrumenté peut, par exemple, être décidé.

Si la valeur mesurée de la section d'acier résiduelle $A_s(t_i)$ est supérieure au critère limite, la durée de vie résiduelle de la tuyauterie $D(t_i)$ est déterminée à l'aide de l'évolution de la section d'acier résiduelle calculée par l'outil prédictif.

L'étape suivante consiste à comparer la valeur de la section d'acier résiduelle mesurée $A_s(t_i)$ à un critère d'alarme CA associé à la tenue mécanique. Cette fois, si la valeur mesurée est inférieure au critère d'alarme, un confortement du tronçon de tuyauterie instrumenté peut, par exemple, être mis en place de manière à différer le remplacement.

Si la valeur mesurée de la section d'acier résiduelle $A_s(t_i)$ est supérieure au critère d'alarme, la durée d'exploitation avant alarme $D_a(t_i)$ est déterminée à l'aide de l'évolution de la section d'acier résiduelle calculée par l'outil prédictif. Dans ces conditions, l'action de maintenance consisterait, par exemple, à ne rien faire et la tuyauterie serait laissée en l'état.

On va maintenant décrire, en référence aux figures précitées. On va maintenant donner une description détaillée d'un forme de réalisation du système selon l'invention.

Le dispositif de monitoring statique est mis en oeuvre sur un nombre limité de zones singulières définies à l'avance. L'objectif de ce dispositif est de suivre, en zones singulières, l'évolution à long terme des déformations longitudinales et circonférentielles des tuyauteries.

Dans le but de fiabiliser ce monitoring statique, deux types de capteurs sont à retenir. Par exemple, une combinaison entre des capteurs d'extensométrie standard (capteurs inductifs) et des capteurs à fibres optiques mesurant sur des bases de longueurs différentes peut être une possibilité.

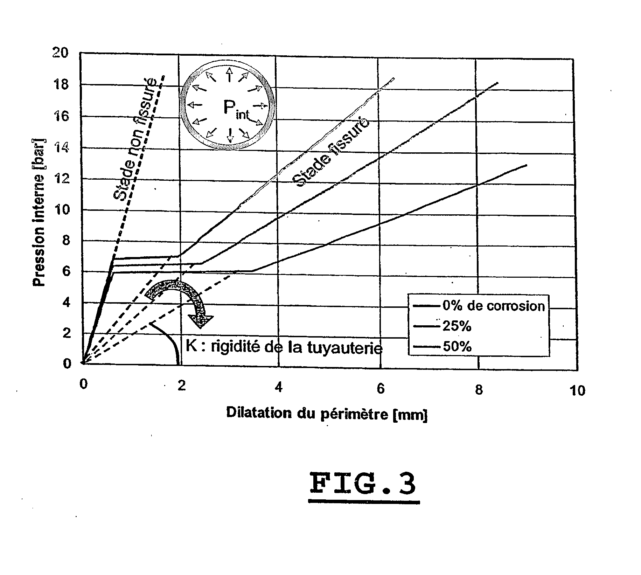

Les déformations longitudinales servent principalement en cas de sollicitations accidentelles (séismes, surpressions) pour vérifier la tenue mécanique des tuyauteries (risque d'éclatement). Les déformations circonférentielles sont utilisées en conditions normales d'exploitation dans le cadre de la solution permettant de suivre l'évolution à long terme de la section d'acier résiduelle, en référence à la figure 3.

Le dispositif de monitoring dynamique exploite la vibration naturelle des tuyauteries sous pression. Il est conçu pour mesurer en un nombre défini de points les vitesses de déplacements à l'aide de sismomètres. L'objectif du dispositif de monitoring dynamique est de déterminer les modes propres de vibration de la tuyauterie (déformée modale) et les fréquences associées.

Suivant la fréquence de mesure, le volume des données brutes recueillies par le dispositif de monitoring devient important. A intervalles réguliers, il est nécessaire de procéder à un prétraitement de ces données afin d'extraire un nombre limité de valeurs permettant de quantifier la section d'acier résiduelle.

Ce prétraitement consiste à partir des données brutes (déformations, pression, fréquences propres, déformées modales) de calculer :

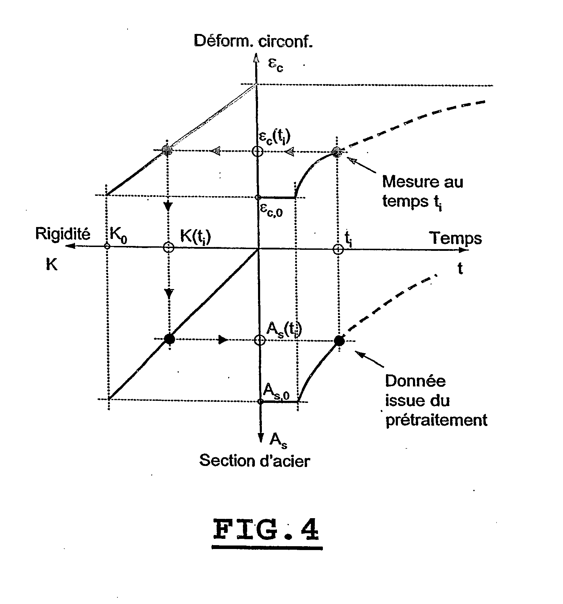

- une déformation moyenne sur une période donnée (par exemple : avant, pendant et après un cycle de mise en pression) ;
- les fréquences propres moyennes en phase d'exploitation ;
- la rigidité K du tronçon de tuyauterie sur une période donnée, en référence aux figures 3 et 4 ;
- la section d'acier résiduelle $A_s$ correspondante.

Le diagramme de la figure 4 permet d'illustrer les différentes étapes du prétraitement dans le cas du monitoring statique. Les lois qui définissent les relations entre les déformations et la rigidité et entre la rigidité et la section d'acier résiduelle sont des caractéristiques intrinsèques de la tuyauterie instrumentée.

Un diagramme similaire à celui de la figure 4 est développé pour le monitoring dynamique. Dans ce cas, les lois utilisées permettent de définir la relation entre une fréquence propre, la perte de rigidité de la zone concernée (ceci dépend du mode de vibration associé) et la section d'acier résiduelle. Ces lois sont également des caractéristiques intrinsèques de la tuyauterie instrumentée et dépendent fortement des conditions de bord de la tuyauterie.

Les différentes étapes du prétraitement des données de base permettent d'aboutir à la valeur de la section d'acier résiduelle, comme l'illustre la figure 4 pour le cas du monitoring statique.

L'étape suivante consiste à comparer, à intervalles réguliers, la section d'acier résiduelle obtenue par le système de monitoring $A_s(t_i)$ à son estimateur $A'_s(t_i)$. Si la différence entre ces deux valeurs est supérieure à une précision fixée au préalable, la valeur de la section d'acier résiduelle mesurée $A_s(t_i)$ est utilisée pour actualiser le modèle de corrosion.

Cette actualisation est basée, entre autres, sur une approche bayesienne qui permet d'améliorer la précision du modèle prédictif lorsque des données de terrain sont disponibles.

La procédure d'actualisation permet de recalculer l'estimateur de la section d'acier résiduelle $A'_s(t_i)$ et son évolution dans le temps $A'_s(t > t_i)$.

L'outil prédictif est conçu de manière à pouvoir intégrer dans la phase d'actualisation du modèle de corrosion une information provenant d'une source autre que le monitoring statique ou dynamique (essais en laboratoire, inspections visuelles, nombre de défaillances, ...).

Une fois que la précision recherchée est obtenue, la valeur de la section d'acier résiduelle mesurée $A_s(t_i)$ est comparée à un critère limite de tenue mécanique CL. Si la valeur mesurée est inférieure au critère, un remplacement immédiat du tronçon de tuyauterie instrumenté peut, par exemple, être décidé.

L'étape suivante consiste à comparer la valeur de la section d'acier résiduelle mesurée $A_s(t_i)$ à un critère d'alarme CA associé à la tenue mécanique. Cette fois, si la valeur mesurée est inférieure au critère d'alarme, un confortement du tronçon de tuyauterie instrumenté peut, par exemple, être mis en place de manière à différer le remplacement.

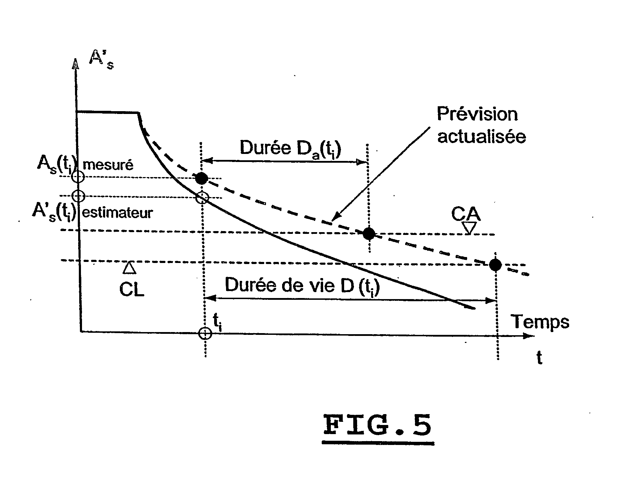

Si la valeur mesurée de la section d'acier résiduelle $A_s(t_i)$ est supérieure au critère limite, la durée de vie résiduelle de la tuyauterie est déterminée à l'aide de l'évolution de la section d'acier résiduelle calculée par l'outil prédictif de la manière suivante, en référence à la figure 5:

$$D(t_i) = t(A_s = CL) - t_i$$

Si la valeur mesurée de la section d'acier résiduelle $A_s(t_i)$ est supérieure au critère d'alarme, la durée d'exploitation avant alarme $D_a(t_i)$ est déterminée à l'aide de l'évolution de la section d'acier résiduelle calculée par l'outil prédictif de la manière suivante:

$$D_a(t_i) = t(A_s = CA) - t_i$$

Lorsque la valeur mesurée de la section d'acier résiduelle $A_s(t_i)$ est supérieure au critère d'alarme, l'action de maintenance consisterait, par exemple, à ne rien faire et la tuyauterie serait laissée en l'état.

Bien sûr, l'invention n'est pas limitée aux exemples qui viennent d'être décrits et de nombreux aménagements peuvent être apportés à ces exemples sans sortir du cadre de l'invention.


**Revendications**

1. Procédé pour surveiller le comportement d'une tuyauterie béton armé contenant un fluide sous pression, cette tuyauterie comportant au moins une zone courante et des zones singulières, ledit procédé comprenant:

   - une surveillance, dite statique, d'un nombre prédéterminé de zones singulières et/ou de zones courantes, pour fournir des informations de dilatations circonférentielles, et
   - un calcul, à partir desdites informations de dilatations circonférentielles, de la rigidité effective K(ti) de la tuyauterie et de sa section d'acier résiduelle As(ti), à partir de lois prédéterminées qui définissent les relations entre lesdites
   dilatations circonférentielles

   et la rigidité et entre la rigidité et la section d'acier résiduelle, lesdites lois étant des caractéristiques intrinsèques de ladite tuyauterie.

2. Procédé selon la revendication 1, **caractérisé en ce qu'**il comprend en outre une surveillance, dite dynamique, de la tuyauterie, pour fournir des informations de modes et de fréquences propres de vibration de ladite tuyauterie, et **en ce que** ces informations de modes et de fréquences propres sont aussi exploitées pour calculer la rigidité K(ti) et la section d'acier résiduelle mesurée As(ti) de la tuyauterie.

3. Procédé selon l'une des revendications 1 ou 2, **caractérisé en ce qu'**il comprend en outre :

   - un processus de prédiction de l'évolution temporelle A's(t>ti) d'un estimateur A's(ti) de la section d'acier résiduelle, cette prédiction étant effectuée sur la base d'une modèle de la corrosion et du comportement mécanique de la tuyauterie,
   - une comparaison entre la section d'acier résiduelle mesurée (As(ti) et l'estimateur A's(ti) de la section d'acier résiduelle, et
   - une actualisation du modèle de corrosion, lorsque la différence entre ladite section d'acier résiduelle mesurée As(ti) et ledit estimateur de section d'acier résiduelle A's(ti) est supérieure à une précision prédéterminée.

4. Procédé selon la revendication 3, **caractérisé en ce que** le processus de prédiction est agencé pour intégrer, dans la phase d'actualisation du modèle de corrosion, une information provenant d'une source externe.

5. Procédé selon l'une des revendications 3 ou 4, **caractérisé en ce qu'**il comprend en outre une comparaison de la valeur mesurée As(ti) de la section d'acier résiduelle à un critère limite de tenue mécanique (CL), cette comparaison étant suivie :

   - soit d'une émission d'une information de remplacement immédiat d'un tronçon de ladite tuyauterie correspondant aux zones surveillées, lorsque cette valeur mesurée As(ti) est inférieure audit critère limite de tenue mécanique (CL),
   - soit d'un calcul d'une durée de vie résiduelle D(ti) de ladite tuyauterie.

**6.** Procédé selon la revendication 5, **caractérisé en ce qu'**il comprend en outre une comparaison de la valeur mesurée As(ti) de la section d'acier résiduelle à un critère d'alarme (CA) associée à la tenue mécanique de ladite tuyauterie, cette comparaison étant suivie :

    - soit d'une émission d'une information de confortement et de remplacement ultérieur d'un tronçon de ladite tuyauterie correspondant aux zones surveillées, lorsque cette valeur mesurée As(ti) est inférieure audit critère d'alarme (CA),
    - -soit d'un calcul d'une durée d'exploitation avant alarme Da(ti) de ladite tuyauterie.

**7.** Système pour surveiller le comportement d'une tuyauterie en béton armé contenant un fluide sous pression, cette tuyauterie comportant au moins une zone courante et des zones singulières, le système comprenant:

    - un dispositif de surveillance, dite statique, d'un nombre prédéterminé de zones singulières et/ou de zones courantes, configuré pour fournir des informations de dilatations circonférentielles, et
    - des moyens configurés pour calculer, à partir desdites informations de dilatations circonférentielles, la rigidité effective K(ti) de la tuyauterie et sa section d'acier résiduelle As(ti), à partir de lois prédéterminées qui définissent les relations entre lesdites
    dilatations circonférentielles

et la rigidité et entre la rigidité et la section d'acier résiduelle, lesdites lois étant des caractéristiques intrinsèques de ladite tuyauterie.

**8.** Système selon la revendication 7, **caractérisé en ce qu'**il comprend en outre un dispositif de surveillance, dite dynamique, de le tuyauterie, pour fournir des informations de modes et de fréquences propres de vibration de ladite tuyauterie, ces informations de modes et de fréquences propres étant exploitées par les moyens de calcul de la rigidité effective K(ti) et de la section d'acier résiduelle mesurée As(ti).

**9.** Système selon l'une des revendications 7 ou 8, **caractérisé en ce qu'**il comprend en outre :

    - des moyens pour prédire l'évolution temporelle A's(t>ti) d'un estimateur A's(ti) de la section d'acier résiduelle, cette prédiction étant effectuée sur la base d'une modèle de la corrosion et du comportement mécanique de la tuyauterie,
    - des moyens pour comparer la section d'acier résiduelle mesurée (As(ti) et l'estimateur A's(ti) de la section d'acier résiduelle, et
    - des moyens pour actualiser le modèle de corrosion, lorsque la différence entre ladite section d'acier résiduelle mesurée As(ti) et ledit estimateur de section d'acier résiduelle A's(ti) est supérieure à une précision prédéterminée.

**10.** Système selon l'une des revendications 7 à 9, **caractérisé en ce que** le dispositif de surveillance statique comprend des moyens pour mesurer des déformations longitudinales d'un tronçon de la tuyauterie et des moyens pour mesurer des déformations circonférentielles dudit tronçon.

**11.** Système selon la revendication 8 et l'une des revendications 9 ou 10, **caractérisé en ce que** le dispositif de surveillance dynamique comprend des moyens de sismométrie pour mesurer en un nombre prédéterminé de points sur la tuyauterie des vitesses de déplacement.

**12.** Système selon l'une des revendications 7 à 11, **caractérisé en ce qu'**il comprend en outre des moyens pour prétraiter des données brutes fournies par le dispositif de surveillance statique et/ou dynamique, ces moyens de prétraitement étant agencés pour calculer une déformation moyenne sur une période données et des fréquences propres moyennes en phase d'exploitation.


**Patentansprüche**

**1.** Verfahren zur Überwachung des Verhaltens einer ein Druckfluid enthaltenden Stahlbetonrohrleitung, wobei diese Rohrleitung wenigstens einen allgemeinen Bereich und Einzelbereiche umfasst, wobei das Verfahren umfasst:

    - eine sogenannte statische Überwachung einer vorbestimmten Anzahl von Einzelbereichen und/oder von allgemeinen Bereichen, um Informationen zu Umfangsausdehnungen bereitzustellen, und
- eine Berechnung, anhand der Informationen zu Umfangsausdehnungen, der tatsächlichen Steifigkeit K(ti) der Rohrleitung und ihres Reststahlquerschnitts As(ti), mittels vorbestimmter Gesetze, die die Beziehungen zwischen den Umfangsausdehnungen und der Steifigkeit sowie zwischen der Steifigkeit und dem Reststahlquerschnitt definieren, wobei die Gesetze intrinsische Merkmale der Rohrleitung sind.

2. Verfahren nach Anspruch 1, **dadurch gekennzeichnet, dass** es ferner eine sogenannte dynamische Überwachung der Rohrleitung umfasst, um Informationen zu Schwingungseigenformen und -frequenzen der Rohrleitung bereitzustellen, und dass diese Informationen zu Eigenformen und -frequenzen auch genutzt werden, um die Steifigkeit K(ti) und den gemessenen Reststahlquerschnitt As(ti) der Rohrleitung zu berechnen.

3. Verfahren nach einem der Ansprüche 1 oder 2, **dadurch gekennzeichnet, dass** es ferner umfasst:

- einen Prozess zur Vorhersage der zeitlichen Entwicklung A's(t>ti) eines Schätzers A's(ti) des Reststahlquerschnitts, wobei diese Vorhersage auf der Basis eines Modells der Korrosion und des mechanischen Verhaltens der Rohrleitung durchgeführt wird,
- einen Vergleich zwischen dem gemessenen Reststahlquerschnitt As(ti) und dem Schätzer A's(ti) des Reststahlquerschnitts, und
- eine Aktualisierung des Korrosionsmodells, wenn die Differenz zwischen dem gemessenen Reststahlquerschnitt As(ti) und dem Schätzer des Reststahlquerschnitts A's(ti) größer als eine vorbestimmte Genauigkeit ist.

4. Verfahren nach Anspruch 3, **dadurch gekennzeichnet, dass** der Vorhersageprozess dazu eingerichtet ist, in die Phase zur Aktualisierung des Korrosionsmodells eine von einer externen Quelle stammende Information zu integrieren.

5. Verfahren nach einem der Ansprüche 3 oder 4, **dadurch gekennzeichnet, dass** es ferner einen Vergleich des gemessenen Wertes As(ti) des Reststahlquerschnitts mit einem Grenzkriterium mechanischer Festigkeit (CL) umfasst, wobei sich an diesen Vergleich anschließt:

- entweder ein Senden einer Information zum sofortigen Ersetzen eines den überwachten Bereichen entsprechenden Abschnitts der Rohrleitung, wenn dieser gemessene Wert As(ti) kleiner als das Grenzkriterium mechanischer Festigkeit (CL) ist,
- oder eine Berechnung einer Restlebensdauer D(ti) der Rohrleitung.

6. Verfahren nach Anspruch 5, **dadurch gekennzeichnet, dass** es ferner einen Vergleich des gemessenen Wertes As(ti) des Reststahlquerschnitts mit einem der mechanischen Festigkeit der Rohrleitung zugeordneten Alarmkriterium (CA) umfasst, wobei sich an diesen Vergleich anschließt:

- entweder ein Senden einer Information zum Stützen und späteren Ersetzen eines den überwachten Bereichen entsprechenden Abschnitts der Rohrleitung, wenn dieser gemessene Wert As(ti) kleiner als das Alarmkriterium (CA) ist,
- oder eine Berechnung einer Nutzungsdauer vor Alarm Da(ti) der Rohrleitung.

7. System zur Überwachung des Verhaltens einer ein Druckfluid enthaltenden Stahlbetonrohrleitung, wobei diese Rohrleitung wenigstens einen allgemeinen Bereich und Einzelbereiche umfasst, wobei das System umfasst:

- eine Vorrichtung zur sogenannten statischen Überwachung einer vorbestimmten Anzahl von Einzelbereichen und/oder von allgemeinen Bereichen, die dazu ausgelegt ist, Informationen zu Umfangsausdehnungen bereitzustellen, und
- Mittel, die dazu ausgelegt sind, anhand der Informationen zu Umfangsausdehnungen die tatsächliche Steifigkeit K(ti) der Rohrleitung und ihren Reststahlquerschnitt As(ti) mittels vorbestimmter Gesetze, die die Beziehungen zwischen den Umfangsausdehnungen und der Steifigkeit sowie zwischen der Steifigkeit und dem Reststahlquerschnitt definieren, zu berechnen, wobei die Gesetze intrinsische Merkmale der Rohrleitung sind.

8. System nach Anspruch 7, **dadurch gekennzeichnet, dass** es ferner eine Vorrichtung zur sogenannten dynamischen Überwachung der Rohrleitung umfasst, um Informationen zu Schwingungseigenformen und - frequenzen der Rohrleitung bereitzustellen, wobei diese Informationen zu Eigenformen und -frequenzen durch die Mittel zur Berechnung der tatsächlichen Steifigkeit K(ti) und des gemessenen Reststahlquerschnitts As(ti) genutzt werden.

**9.** System nach einem der Ansprüche 7 oder 8, **dadurch gekennzeichnet, dass** es ferner umfasst:

- Mittel zur Vorhersage der zeitlichen Entwicklung A's(t>ti) eines Schätzers A's(ti) des Reststahlquerschnitts, wobei diese Vorhersage auf der Basis eines Modells der Korrosion und des mechanischen Verhaltens der Rohrleitung durchgeführt wird,
- Mittel zum Vergleichen des gemessenen Reststahlquerschnitts As(ti) und des Schätzers A's(ti) des Reststahlquerschnitts, und
- Mittel zur Aktualisierung des Korrosionsmodells, wenn die Differenz zwischen dem gemessenen Reststahlquerschnitt As(ti) und dem Schätzer des Reststahlquerschnitts A's(ti) größer als eine vorbestimmte Genauigkeit ist.

**10.** System nach einem der Ansprüche 7 bis 9, **dadurch gekennzeichnet, dass** die Vorrichtung zur statischen Überwachung Mittel zur Messung von Längsverformungen eines Abschnitts der Rohrleitung sowie Mittel zur Messung von Umfangsverformungen des Abschnitts umfasst.

**11.** System nach Anspruch 8 und einem der Ansprüche 9 oder 10, **dadurch gekennzeichnet, dass** die Vorrichtung zur dynamischen Überwachung Seismometrie-Mittel, um an einer vorbestimmten Anzahl von Stellen an der Rohrleitung Bewegungsgeschwindigkeiten zu messen, umfasst.

**12.** System nach einem der Ansprüche 7 bis 11, **dadurch gekennzeichnet, dass** es ferner Mittel zur Vorverarbeitung von durch die Vorrichtung zur statischen und/oder dynamischen Überwachung gelieferten Rohdaten umfasst, wobei diese Vorverarbeitungsmittel dazu eingerichtet sind, eine durchschnittliche Verformung über einen gegebenen Zeitraum und durchschnittliche Eigenfrequenzen in der Nutzungsphase zu berechnen.

## Claims

**1.** A method for monitoring the performance of a pipe containing a pressurized fluid, made of reinforced concrete, this pipe comprising at least one continuous run zone and singularity zones, said method comprising:

- a monitoring, said static monitoring, of a predetermined number of singularity zones and/or continuous run zones, in order to provide circumferential expansion information, and
- a calculation of the effective stiffness K(ti) of the pipe and its residual steel cross-section As(ti) using said circumferential expansion information and predetermined laws defining the relationships between said circumferential expansion and the stiffness and between the stiffness and the residual cross-section, said laws being the intrinsic characteristics of said pipe

**2.** The method according to claim 1, **characterized in that** it also comprises a dynamic monitoring of the pipe in order to provide information relating to the vibration eigen modes and frequencies of said pipe, and **in that** this information relating to eigen modes and frequencies is also used to calculate the stiffness K(ti) and the measured residual steel cross-section As(ti) of the pipe.

**3.** The method according to one of claims 1 or 2, **characterized in that** it also comprises:

- a process of predicting the temporal evolution A's(t>ti) of an estimator A's(ti) of the residual steel cross-section, this prediction being made on the basis of a model of the corrosion and the mechanical performance of the pipe,
- a comparison between the measured residual steel cross-section (As(ti) and the estimator A's(ti) of the residual steel cross-section, and
- an updating of the corrosion model, when the difference between said measured residual steel cross-section As(ti) and said estimator of the residual steel cross-section A's(ti) is greater than a predetermined precision.

**4.** The method according to claim 3, **characterized in that** the prediction process is organized so as to integrate, in the phase of updating the corrosion model, information coming from an external source.

**5.** The ethod according to one of claims 3 or 4, **characterized in that** it also comprises a comparison of the measured value As(ti) of the residual steel cross-section with a limit criterion of mechanical strength (CL), this comparison being followed by:

- either a transmission of information for immediate replacement of a section of said pipe corresponding to the monitored zones, when this measured value As(ti) is less than said limit criterion for mechanical strength (CL),
- or a calculation of the remaining service life D(ti) of said pipe.

6. The method according to claim 5, **characterized in that** it also comprises a comparison of the measured value As(ti) of the residual steel cross-section with an alarm criterion (CA) associated with the mechanical strength of said pipe, this comparison being followed by:

- either a transmission of information for reinforcement and subsequent replacement of a section of said pipe corresponding to the monitored zones, when this measured value As(ti) is less than said alarm criterion (CA),
- or a calculation of operating time before the alarm Da(ti) of said pipe actuates.

7. A system for monitoring the performance of a pipe containing a pressurized fluid, made of reinforced concrete, this pipe comprising at least one continuous run zone and singularity zones, the system comprising:

- a device for monitoring, said static monitoring, of a predetermined number of singularity zones and/or continuous run zones in order to provide circumferential expansion information, and
- means configured for calculating the effective stiffness K(ti) of the pipe and its residual steel cross-section As(ti) using said circumferential expansion information and predetermined laws defining the relationships between said circumferential expansion and the stiffness and between the stiffness and the residual cross-section, said laws being the intrinsic characteristics of said pipe

8. The system according to claim 7, **characterized in that** it also comprises a device for dynamic monitoring of the pipe in order to provide information on eigen vibration modes and frequencies of said pipe, this information on eigen modes and frequencies being used by the means for calculation of the effective stiffness K(ti) and of the measured residual steel cross-section As(ti).

9. The system according to one of claims 7 or 8, **characterized in that** it also comprises:

- means for predicting the temporal evolution A's(t>ti) of an estimator A's(ti) of the residual steel cross-section, this prediction being made on the basis of a model of the corrosion and the mechanical performance of the pipe,
- means for comparing the measured residual steel cross-section (As(ti) and the estimator A's(ti) of the residual steel cross-section, and
- means for updating the corrosion model, when the difference between said measured residual steel cross-section As(ti) and said estimator of the residual steel cross-section A's (ti) is greater than a predetermined precision.

10. The system according to one of claims 7 to 9, **characterized in that** the static monitoring device comprises means for measuring longitudinal deformations of a section of the pipe and means for measuring circumferential deformations of said section.

11. The system according to claim 8 and one of claims 9 or 10, **characterized in that** the dynamic monitoring device comprises seismometry means for measuring displacement speeds at a predetermined number of points on the pipe.

12. The system according to one of claims 7 to 11, **characterized in that** it also comprises means for pre-processing raw data provided by the static and/or dynamic monitoring device, these pre-processing means being designed to calculate an average deformation over a given period and average eigen frequencies in the operating phase.

**Outil prédictif**

**Monitoring et prétraitement**

Informations provenant d'autres sources que le monitoring

Modélisation de la corrosion

Actualisation du modèle

Calcul de la section d'acier résiduelle $A'_s(t_i)$

Evolution $A'_s(t > t_i)$

$A_s(t_i) - \alpha < A'_s(t_i) < A_s(t_i) + \alpha$

non

oui

Evolution $A'_s(t > t_i)$ ok

$A_s(t_i) > CL$

non

oui

Durée de vie résiduelle $D(t_i)$

$A_s(t_i) > CA$

non

oui

Durée avant alerte $D_a(t_i)$

Monitoring statique

Monitoring dynamique

Dilatations circonférent -ielles

Modes et fréquences propres

Calcul de la rigidité effective $K(t_i)$

Calcul de la section d'acier résiduelle $A_s(t_i)$

**Actions de maintenance**

Remplacement immédiat

Confortement et remplacement ultérieur

Ne rien faire à $t_i$

$$FIG. 1$$

Monitoring statique : par
exemple extensomètrie

Monitoring statique : par
exemple : capteurs à fibres
optiques

Zones singulières fissurées
longitudinales

FIG.2

**FIG.3**

Déform. circonf.

$\varepsilon_c$

$\varepsilon_c(t_i)$

Mesure au temps $t_i$

$\varepsilon_{c,0}$

Rigidité $K_0$ $K(t_i)$ $t_i$ Temps

K t

$A_s(t_i)$

Donnée issue du prétraitement

$A_{s,0}$

$A_s$

Section d'acier

# FIG.4

**FIG.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3531975 A1